# EUROPÄISCHE PATENTSCHRIFT

(11) **EP 4 461 975 B1**
(45) Veröffentlichungstag und Bekanntmachung des Hinweises auf die Patenterteilung: **10.09.2025**
(21) Anmeldenummer: 23172336.2
(22) Anmeldetag: 09.05.2023
(51) Int. Cl.: F16B 25/00, F16B 35/04

(54) **SELBSTSCHNEIDENDE SCHRAUBE**
SELF-TAPPING SCREW
VIS AUTOTARAUDEUSE

(43) Veröffentlichungstag der Anmeldung: 13.11.2024
(73) Patentinhaber: Knapp Holding GmbH, 3324 Euratsfeld (AT)
(72) Erfinder: KNAPP, Friedrich, 4362 Bad Kreuzen (AT)
(74) Vertreter: Weiser Voith Gugler Patentanwälte Partnerschaft

(56) Entgegenhaltungen:
- EP-A1- 3 249 244
- EP-A1- 3 855 028
- US-A1- 2008 175 688
- US-B2- 10 000 928

## Beschreibung

Die vorliegende Erfindung betrifft selbstschneidende Schraube mit einem zylindrischen Schaft mit einer zentralen Achse, an den koaxial eine konusförmige Spitze anschließt, und einer radial auskragenden Schneidrippe, die in Windungen wendelförmig über den Schaft und die Spitze verläuft, wobei der Abstand zweier benachbarter Windungen in Achsrichtung die Ganghöhe der Schraube ist, und wobei der Schaft mit einer seitlichen Ausnehmung versehen ist, die zumindest eine Windung der Schneidrippe unterbricht und in den Schaft bis höchstens zu dessen halbem Durchmesser eindringt.

Schrauben dieser Art sind beispielsweise aus den Schriften AU 200027716 A1 und CN 201747735 U bekannt. Die Unterbrechung der Schneidrippe durch die Ausnehmung erzeugt pro Windung eine scharfe, in Umfangsrichtung wirkende Schneidspitze, welche das Einschneiden des Gewindes in einen Bauteil beim Eindrehen der Schraube erleichtert.

Das Dokument EP 3 249 244 A1 zeigt eine Schraube, die in Verbindung mit Holzgegenständen verwendet wird, wobei die Schraube ein zweites Gewinde hat.

Zahlreiche Ausführungsformen solcher Schneidausnehmungen sind im Stand der Technik bekannt. Die bekannten Lösungen, z.B. aus den Schriften EP 3 855 028 A1 und EP 3 249 244 A1, haben den Nachteil, dass sie entweder die Schraube über Gebühr schwächen, zu wenig Schneidunterstützung bieten oder die Schraube beim Eindrehen dezentrieren. Die Erfindung setzt sich zum Ziel, diese Nachteile zu überwinden und eine verbesserte selbstschneidende Schraube zu schaffen.

Dieses Ziel wird mit einer selbstschneidenden Schraube gemäß dem Anspruch 1 erreicht.

Die erfindungsgemäße Schneidausnehmung löst gleich mehrere Probleme selbstschneidender Schrauben mit einem Schlag. Dadurch, dass die Ausnehmung nicht in die Spitze hineinreicht, bleibt die Zentrierwirkung der Spitze beim Eindrehen der Schraube unbeeinträchtigt. Die Ausnehmung liegt anderseits unmittelbar hinter der Spitze, also weit vorne an der Schraube, sodass sie die Torsionsfestigkeit der Schraube beim Eindrehen und ihre Zugfestigkeit im eingedrehten Zustand geringstmöglich schwächt. Auch jener Teil der Schraube, der zwischen Ausnehmung und Spitze liegt und über den von der Ausnehmung belassenen Schwächungsbereich des Schaftes angebunden ist, ist minimiert, und damit auch die Anzahl jener Windungen, die sich auf diesem Teil befinden und der Umfangsreibung beim Eindrehen unterliegen. Gleichzeitig gewährleistet die Lage der Ausnehmung hinter der Spitze, dass dort die Schneidrippe bereits mit dem vollen Außendurchmesser das Gewinde in den Bauteil schneidet, was die Schneidwirkung verbessert.

Die erfindungsgemäße Schraube schneidet ihr Gewinde besonders schonend in den Bauteil und reduziert so die Gefahr eines Spaltens oder Aufbrechens des Bauteils beim Eindrehen, insbesondere wenn dieser aus Holz ist. Damit kann der zum Bauteilrand einzuhaltende Mindestabstand verringert werden. Dies ist ein besonderer Vorteil im Ingenieurholzbau, beispielsweise beim Verbinden von Haupt-, Neben- oder Querträgern, Querzügen, Bindern, Stützen, Pfosten, Wänden od.dgl. Die hier zu verbindenden Bauteile sind meist aus Brettschichtholz (BSH), und die Einhaltung von Mindestrandabständen für Schraubverbindungen ist zur Vermeidung von Holzspaltung unabdingbar. Kleinere Mindestrandabstände ermöglichen die Verwendung geringerer Holzquerschnitte bei gleicher Festigkeit, was Kosten reduziert und die Handhabung vereinfacht.

Bevorzugt hat das der Spitze abgewandte Ende der Ausnehmung von der Spitze einen Abstand, der höchstens vier Ganghöhen beträgt. Dadurch liegt die Schneidausnehmung besonders nahe und der Spitze, so dass die Torsions- und Zugfestigkeit eines möglichst großen Teils der Schraube von der Schneidausnehmung unbeeinträchtigt ist.

In einer besonders vorteilhaften Ausführungsform hat das der Spitze zugewandte Ende der Ausnehmung von der Spitze einen Abstand, der mindestens eine halbe und höchstens drei Ganghöhen beträgt, besonders bevorzugt ein bis zwei Ganghöhen. Dadurch verbleibt zwischen der Spitze und der Ausnehmung ein sehr kurzer Bereich, in dem nur ganz wenige, aber ausreichend viele Windungen der Schneidrippe mit vollem Durchmesser vorliegen, was das Zentrieren der Schraube beim Eindrehen begünstigt.

Die Ausnehmung kann in Achsrichtung gesehen beispielsweise die Form eines Kreissegments haben. Ein solches lässt sich durch Schleifen, Fräsen, Walzen, Prägen oder Stauchen besonders einfach herstellen. Alternativ kann die Ausnehmung in Achsrichtung gesehen die Form eines Kreissektors haben, z.B. eines Drittels, Viertels, Fünftels usw. eines Kreises. So könnten beispielsweise auch mehrere Ausnehmungen an verschiedenen Umfangspositionen des Schaftes vorgesehen werden.

Bevorzugt hat die Ausnehmung in einer die Achse enthaltenden Ebene normal auf diese Ebene gesehen die Form eines Rechtecks, eines Kreis- oder eines Ellipsensegments. Auch diese Formen können durch Fräsen, Schleifen, Walzen, Prägen oder Stauchen leicht hergestellt werden.

Gemäß der Erfindung nimmt die Auskraghöhe der Schneidrippe auf der Spitze zum Scheitel der Spitze hin fortschreitend ab. Diese Maßnahme erleichtert das Zentrieren und Einschneiden des Gewindes in den Bauteil beim Eindrehen der Schraube bei gleichzeitig größtmöglicher Schonung des Bauteils.

Besonders günstig ist es, wenn die Eindringtiefe der Ausnehmung 10 - 50 % des Durchmessers des Schaftes beträgt, bevorzugt 35 - 45 %. Dies ergibt einen ausgezeichneten Kompromiss zwischen Minimierung der Schwächungswirkung der Ausnehmung einerseits und Maximierung ihres Schneideffekts anderseits.

In all diesen Ausführungsformen kann bevorzugt vorgesehen werden, dass der Schaft an seinem der Spitze abgewandten Ende über einen sich erweiternden Übergangsabschnitt in einen zylinderförmigen Abschnitt mit größerem Durchmesser als der Schaft übergeht, an welchen Abschnitt ein Kopf für den Angriff eines Werkzeugs anschließt. Der verbreitete zylinderförmige Abschnitt kann als Führungsabschnitt der Schraube in einem Beschlag mit zylinderförmiger Bohrung verwendet werden und ergibt eine gute Krafteinleitung vom Kopf auf den Schaft beim Eindrehen.

Bevorzugt hat der Kopf einen größeren Durchmesser als der Abschnitt und zwischen Kopf und Abschnitt ist ein Absatz ausgebildet ist. Der Absatz kann als Anlagefläche für einen Beschlag, der mittels der Schraube an einen Bauteil geschraubt wird, verwendet werden. Der verbreiterte Kopf bietet gleichzeitig ausreichend Platz für einen Innensechskant, ein Innensechsrund od.dgl. zum Angriff eines entsprechenden Werkzeugs.

Die Erfindung wird nachstehend anhand von in den beigeschlossenen Zeichnungen dargestellten Ausführungsbeispielen näher erläutert. In den Zeichnungen zeigt:
Fig. 1 eine erste Ausführungsform der Schraube der Erfindung in einer Seitenansicht;
Fig. 2 die Schraube von Fig. 1 in einer Schrägansicht von oben;
Fig. 3 eine zweite Ausführungsform der Schraube der Erfindung in einem axialnormalen Schnitt auf Höhe der Ausnehmung;
Fig. 4 eine dritte Ausführungsform der Schraube der Erfindung in einem axialnormalen Schnitt analog zu Fig. 3; und
Fig. 5 eine vierte Ausführung der Schraube der Erfindung in einer Seitenansicht.

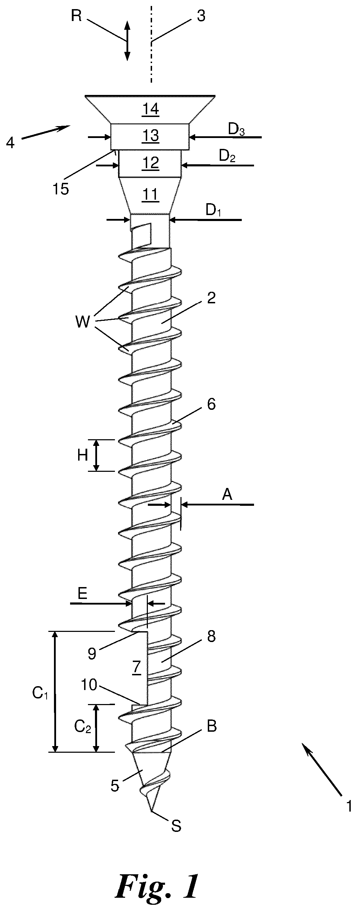

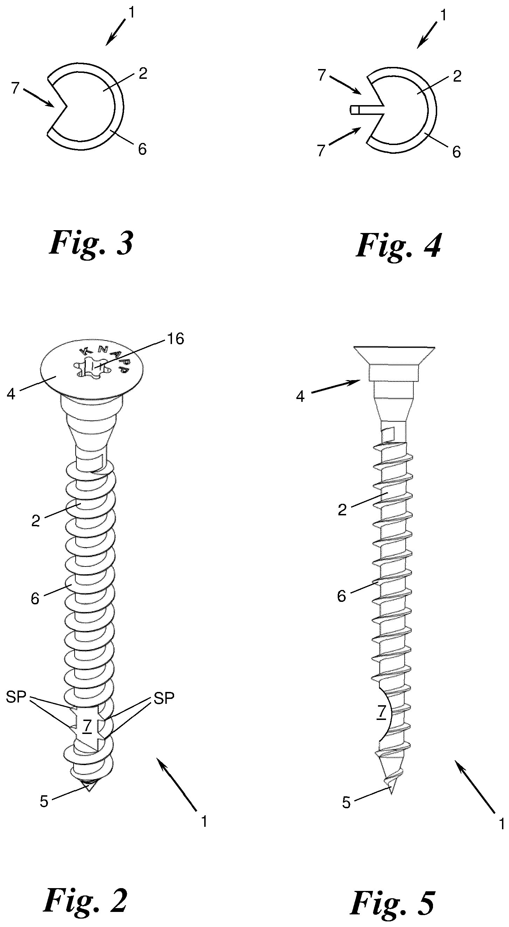

In den Fig. 1 und 2 ist eine selbstschneidende Schraube 1 zum Einschrauben bzw. Eindrehen in einen Bauteil (nicht gezeigt) dargestellt, der beispielsweise aus Holz oder Kunststoff ist. Die Schraube 1 hat einen zylindrischen Schaft 2 mit einer zentralen Achse 3. An den Schaft 2 schließt am einen (hinteren) Ende ein Kopf 4 und am anderen (vorderen) Ende eine konusförmige Spitze 5 mit einer Basis B und einem Scheitel S an. Wendelförmig rund um und über den Schaft 2 und die Spitze 5 verläuft eine Schneidrippe 6 in mehreren Windungen W. Jede Windung W verläuft in Richtung der Achse 3 - der Achsrichtung R - gesehen um 360° rund um die Achse 3. Der Abstand zweier benachbarter Windungen 3 in Achsrichtung R ist die Ganghöhe H der Schraube 1.

Die Schneidrippe 6 hat in einem Längsschnitt, der die Achse 3 enthält, etwa Dreieck- oder Trapezform und kragt von der Oberfläche des Schaftes 2 bzw. der Oberfläche der Spitze 5 - normal zur Achse 3 gemessen - um eine Auskraghöhe A aus. Die Auskraghöhe A vom Schaft 2 beträgt 5 - 20 % des Durchmessers D₁ des Schaftes 2. Auf der Spitze 5 läuft die Schneidrippe 6 allmählich bis zum Scheitel S hin aus, d.h. ihre Auskraghöhe A nimmt auf der Spitze 5 von der an den Schaft 2 anschließenden Basis B bis zum Scheitel S der Spitze 5 hin fortschreitend ab, wobei sie den Wert null bereits auch schon vor dem Scheitel S erreichen kann, wie in Fig. 1 gezeigt.

Der Schaft 2 einschließlich der darauf wendelförmig verlaufenden Schneidrippe 6 ist mit einer seitlichen Ausnehmung 7 versehen, welche zumindest eine Windung W der Schneidrippe 6 unterbricht.

Die Ausnehmung 7 belässt von der Schneidrippe 7 dort, wo sie diese unterbricht, Schneidspitzen SP, wie aus Fig. 2 ersichtlich.

Die Eindringtiefe E der Ausnehmung 7 in den Schaft 2, gemessen normal zur Achse 3 und normal auf den tiefsten Bereich der Ausnehmung 7, beträgt 10 - 50 %, bevorzugt 35 - 45 %, besonders bevorzugt etwa 40 %, des Durchmessers D₁ des Schaftes 2. Die minimale Dicke des von der Ausnehmung 7 auf Höhe der Ausnehmung 7 belassenen Bereiches 8 des Schaftes 2 beträgt daher 90 - 50 %, bevorzugt 65 - 55 %, besonders bevorzugt etwa 60 %, des Durchmessers D₁ des Schaftes 2.

Die Ausnehmung 7 ist von der Spitze 5 freigestellt, d.h. die Spitze 5 ist frei von jedweder Ausnehmung 7 - auch im Falle von mehreren Ausnehmungen 7 wie später beschrieben. Die Ausnehmung 7 ist jedoch der Spitze 5 sehr nahe, d.h. möglichst knapp hinter der Spitze 5 angeordnet. Beispielsweise hat das der Spitze 5 abgewandte Ende 9 der Ausnehmung 7 von der Spitze 5, also von deren Basis B, einen Abstand C₁, der höchstens fünf Ganghöhen H beträgt, bevorzugt höchstens vier Ganghöhen H. Das der Spitze 5 zugewandte Ende 10 der Ausnehmung 7 hat einen Abstand C₂ von der Spitze 5, der mindestens null und höchstens vier Ganghöhen H ist, bevorzugt mindestens eine halbe und höchstens drei Ganghöhen H, besonders bevorzugt ein bis zwei Ganghöhen H.

Wie aus Fig. 2 ersichtlich, kann die Ausnehmung 7 in Achsrichtung R gesehen die Form eines Kreissegments haben. Die Fig. 3 und 4 zeigen alternative Ausführungsformen, in denen die bzw. jede Ausnehmung 7 in Achsrichtung R gesehen die Form eines Kreis- oder Ellipsensektors hat. Fig. 4 zeigt dabei die Möglichkeit, mehr als eine Ausnehmung 7 über den Umfang des Schaftes 2 verteilt vorzusehen. Im Falle mehrerer Ausnehmungen 7 erfüllt jede einzelne die vorgenannten Bedingungen, die für eine Ausnehmung 7 hier beschrieben sind. Insbesondere hält sich jede Ausnehmung 7 von der Spitze 5 frei und ihr jeweiliges spitzenabgewandtes Ende 9 hat einen Abstand C₁ von höchstens fünf Ganghöhen H. Die Ausnehmungen 7 können aber sonst unterschiedlich ausgestaltet sein.

Die Ausnehmung 7 kann in einer die Achse 3 enthaltenden Ebene und normal auf diese Ebene gesehen die Form eines Rechtecks haben, siehe Fig. 1. Alternativ sind auch andere Formen möglich, beispielsweise die in Fig. 5 gezeigte Form eines Kreis- oder Ellipsensegments.

Das der Spitze 5 abgewandte Ende des Schaftes 2 kann auf vielerlei Arten für den Angriff eines Werkzeugs oder Schraubendrehers ausgestaltet sein. Beispielsweise kann das Ende direkt mit einem Innensechskant od.dgl. ausgestattet sein. In den gezeigten Beispielen schließt an das der Spitze 5 abgewandte Ende des Schaftes 2 ein sich kegelstumpfförmig erweiternder Übergangsabschnitt 11 an, der in einen zylinderförmigen Abschnitt 12 mit einem größeren Durchmesser D₂ als der Schaftdurchmesser D₁ übergeht. Der zylinderförmige Abschnitt 12 kann beispielsweise zur Führung in einer Zylinderbohrung eines Beschlages verwendet werden, der mittels der Schraube 1 an einen Bauteil angeschraubt werden soll.

An den zylinderförmigen Abschnitt 12 kann dann der Kopf 4 anschließen. Der Kopf 4 kann beispielsweise seinerseits einen zylinderförmigen Teil 13 mit einem größeren Durchmesser D₃ als der Durchmesser D₂ des zylinderförmigen Abschnitts 12 haben, so dass sich dazwischen ein Absatz 15 ergibt. An den zylinderförmigen Teil 13 schließt wiederum ein sich erweiternder Einsenkteil 14 mit einem Schlitz oder Kreuzschlitz für den Eingriff eines Schraubendrehers oder mit einem Innensechskant, Innensechsrund oder einer sonstwie ausgestalteten Aufnahme 16 für den Eingriff eines Werkzeugs zum Drehen der Schraube 1 an.

Die Schraube 1 kann aus jedem beliebigen Material gefertigt sein, z.B. Kunststoff oder Metall, insbesondere Stahl oder Edelstahl.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Selbstschneidende Schraube, mit einem zylindrischen Schaft (2) mit einer zentralen Achse (3), an den koaxial eine konusförmige Spitze (5) anschließt, und einer radial auskragenden Schneidrippe (6), die in Windungen (W) wendelförmig über den Schaft (2) und die Spitze (5) verläuft, wobei der Abstand zweier benachbarter Windungen (W) in Achsrichtung (R) die Ganghöhe (H) der Schraube (1) ist und die Schneidrippe (6) auf der Spitze (5) allmählich bis zu ihrem Scheitel (S) hin ausläuft, das heißt ihre Auskraghöhe (A) auf der Spitze (5) von einer an den Schaft (2) anschließenden Basis (B) zum Scheitel (S) der Spitze (5) hin fortschreitend abnimmt, und wobei der Schaft (2) mit einer seitlichen Ausnehmung (7) versehen ist, die zumindest eine Windung (W) der Schneidrippe (6) unterbricht und in den Schaft (2) bis höchstens zu dessen halbem Durchmesser (D₁) eindringt, wobei das der Spitze (5) abgewandte Ende (9) der Ausnehmung (7) von der Spitze (5) einen Abstand (C₁) hat, der höchstens fünf Ganghöhen (H) beträgt, wobei die Spitze (5) frei von jedweder Ausnehmung (7) ist.

2. Schraube nach Anspruch 1, **dadurch gekennzeichnet, dass** das der Spitze (5) abgewandte Ende (9) der Ausnehmung (7) von der Spitze (5) einen Abstand (C₁) hat, der höchstens vier Ganghöhen (H) beträgt.

3. Schraube nach Anspruch 1 oder 2, **dadurch gekennzeichnet, dass** das der Spitze (5) zugewandte Ende (10) der Ausnehmung (7) von der Spitze (5) einen Abstand (C₂) hat, der mindestens eine halbe und höchstens drei Ganghöhen (H) beträgt.

4. Schraube nach Anspruch 3, **dadurch gekennzeichnet, dass** das der Spitze (5) zugewandte Ende (10) der Ausnehmung (7) von der Spitze (5) einen Abstand (C₂) hat, der ein bis zwei Ganghöhen (H) beträgt.

5. Schraube nach einem der Ansprüche 1 bis 4, **dadurch gekennzeichnet, dass** die Ausnehmung (7) in Achsrichtung (R) gesehen die Form eines Kreissegments hat.

6. Schraube nach einem der Ansprüche 1 bis 4, **dadurch gekennzeichnet, dass** die Ausnehmung (7) in Achsrichtung (R) gesehen die Form eines Kreis- oder Ellipsensektors hat.

7. Schraube nach einem der Ansprüche 1 bis 6, **dadurch gekennzeichnet, dass** die Ausnehmung (7) in einer die Achse (3) enthaltenden Ebene normal auf diese Ebene gesehen die Form eines Rechtecks hat.

8. Schraube nach einem der Ansprüche 1 bis 6, **dadurch gekennzeichnet, dass** die Ausnehmung (7) in einer die Achse (3) enthaltenden Ebene normal auf diese Ebene gesehen die Form eines Kreis- oder Ellipsensegments hat.

9. Schraube nach einem der Ansprüche 1 bis 8, **dadurch gekennzeichnet, dass** die Eindringtiefe (E) der Ausnehmung (7) 10 - 50 % des Durchmessers (D₁) des Schaftes (2) beträgt, bevorzugt 35 - 45 %.

10. Schraube nach einem der Ansprüche 1 bis 9, **dadurch gekennzeichnet, dass** der Schaft (2) an seinem der Spitze (5) abgewandten Ende über einen sich erweiternden Übergangsabschnitt (11) in einen zylinderförmigen Abschnitt (12) mit größerem Durchmesser (D₂) als der Schaft (2) übergeht, an welchen Abschnitt (12) ein Kopf (4) für den Angriff eines Werkzeugs anschließt.

11. Schraube nach Anspruch 10, **dadurch gekennzeichnet, dass** der Kopf (4) einen größeren Durchmesser (D₃) als der zylinderförmige Abschnitt (12) hat und zwischen Kopf (4) und zylinderförmigem Abschnitt (12) ein Absatz (15) ausgebildet ist.

## Claims

1. A self-tapping screw, having a cylindrical shaft (2) with a central axis (3), to which a conical tip (5) is coaxially contiguous, and a radially projecting cutting rib (6), which runs helically in windings (W) over the shaft (2) and the tip (5), wherein the distance between two adjacent windings (W) in axial direction (R) is the pitch (H) of the screw (1) and the cutting rib (6) on the tip (5) gradually tapers off in its apex (S), i.e. its projecting height (A) on the tip (5) progressively decreases from a base (B) contiguous to the shaft (2) to the apex (S) of the tip (5), and wherein the shaft (2) is provided with a lateral recess (7), which interrupts at least one winding (W) of the cutting rib (6) and penetrates into the shaft (2) up to at most half its diameter (D₁), wherein the end (9) of the recess (7) facing away from the tip (5) has a distance (C₁) from the tip (5) which is at most five pitches (H), wherein the tip (5) is free of any recess (7).

2. The screw according to claim 1, **characterised in that** the end (9) of the recess (7) facing away from the tip (5) has a distance (C₁) from the tip (5) which is at most four pitches (H).

3. The screw according to claim 1 or 2, **characterised in that** the end (10) of the recess (7) facing the tip (5) has a distance (C₂) from the tip (5) which is at least half a pitch and at most three pitches (H).

4. The screw according to claim 3, **characterised in that** the end (10) of the recess (7) facing the tip (5) has a distance (C₂) from the tip (5) which is one to two pitches (H).

5. The screw according to one of claims 1 to 4, **characterised in that** the recess (7), viewed in axial direction (R), has the shape of a circular segment.

6. The screw according to one of claims 1 to 4, **characterised in that** the recess (7), viewed in the axial direction (R), has the shape of a circular or an ellipsoidal sector.

7. The screw according to one of claims 1 to 6, **characterised in that** the recess (7), viewed perpendicular to a plane containing the axis (3), has the shape of a rectangle.

8. The screw according to one of claims 1 to 6, **characterised in that** the recess (7), viewed perpendicular to a plane containing the axis (3), has the shape of a circular or an ellipsoidal segment.

9. The screw according to one of claims 1 to 8, **characterised in that** the penetration depth (E) of the recess (7) is 10 - 50% of the diameter (D₁) of the shaft (2), preferably 35 - 45%.

10. The screw according to one of claims 1 to 9, **characterised in that** the shaft (2) transitions at its end facing away from the tip (5), via a widening transition section (11), into a cylindrical section (12) with a larger diameter (D₂) than the shaft (2), to which section (12) a head (4) for the engagement of a tool is contiguous.

11. The screw according to claim 10, **characterised in that** the head (4) has a larger diameter (D₃) than the cylindrical section (12) and that a shoulder (15) is formed between the head (4) and the cylindrical section (12).

## Revendications

1. Vis autotaraudeuse, ayant une tige (2) cylindrique avec un axe (3) central, à laquelle une pointe (5) conique fait suite de manière coaxiale, et une nervure de coupe (6) faisant saillie radialement, qui s'étend en spires (W) de forme hélicoïdale sur la tige (2) et la pointe (5), dans laquelle la distance entre deux spires (W) voisines dans la direction axiale (R) est le pas (H) de la vis (1) et la nervure de coupe (6) se termine graduellement sur la pointe (5) jusqu'à son apex (S), c'est-à-dire que sa hauteur en saillie (A) sur la pointe (5) diminue progressivement à partir d'une base (B) faisant suite à la tige (2) jusqu'à l'apex (S) de la pointe (5), et dans laquelle la tige (2) est pourvue d'un évidement (7) latéral qui interrompt au moins un spire (W) de la nervure de coupe (6) et pénètre dans la tige (2) jusqu'au plus égale à la moitié de son diamètre (D₁), dans laquelle l'extrémité (9) à l'opposé de la pointe (5) de l'évidement (7) est à une distance (C₁) de la pointe (5) qui est au plus de cinq pas (H), dans laquelle la pointe (5) est exempte de tout évidement (7).

2. Vis selon la revendication 1, **caractérisée en ce que** l'extrémité (9) à l'opposé de la pointe (5) de l'évidement (7) est à une distance (C₁) de la pointe (5) qui est au plus égale à quatre pas (H).

3. Vis selon la revendication 1 ou 2, **caractérisée en ce que** l'extrémité (10) en face de la pointe (5) de l'évidement (7) est à une distance (C₂) de la pointe (5) qui est au moins égale à la moitie d'un pas et au plus égale à trois pas (H).

4. Vis selon la revendication 3, **caractérisée en ce que** ce que l'extrémité (10) en face de la pointe (5) de l'évidement (7) est à une distance (C₂) de la pointe (5) qui se situe entre un et deux pas (H).

5. Vis selon l'une des revendications 1 à 4, **caractérisée en ce que** l'évidement (7) a la forme d'un segment circulaire vu en direction axiale (R).

6. Vis selon l'une des revendications 1 à 4, **caractérisée en ce que** l'évidement (7) a la forme d'un secteur circulaire ou elliptique, vu en direction axiale (R).

7. Vis selon l'une des revendications 1 à 6, **caractérisée en ce que** l'évidement (7) a la forme d'un rectangle vu en direction normale à un plan contenant l'axe (3).

8. Vis selon l'une des revendications 1 à 6, **caractérisée en ce que** l'évidement (7) a la forme d'un segment circulaire ou elliptique vu en direction normale à un plan contenant l'axe (3).

9. Vis selon l'une des revendications 1 à 8, **caractérisée en ce que** la profondeur de pénétration (E) de l'évidement (7) se situe entre 10 et 50 % du diamètre (D₁) de la tige (2), de préférence entre 35 et 45 %.

10. Vis selon l'une des revendications 1 à 9, **caractérisée en ce que** la tige (2) fait transition à son extrémité à l'opposé de la pointe (5), par le biais d'un tronçon (11) de transition s'élargissant, en un tronçon (12) cylindrique avec un diamètre (D₂) plus grand que la tige (2), sur lequel tronçon (12) une tête (4) pour l'engagement d'un outil fait suite.

11. Vis selon la revendication 10, **caractérisée en ce que** la tête (4) a un diamètre (D₃) plus grand que le tronçon (12) cylindrique et qu'un épaulement (15) est formé entre la tête (4) et le tronçon (12) cylindrique.
